# FASCICULE DE BREVET EUROPEEN

(11) **EP 1 914 438 B1**
(45) Date de publication et mention de la délivrance du brevet: **05.05.2010**
(21) Numéro de dépôt: 07118199.4
(22) Date de dépôt: 10.10.2007
(51) Int. Cl.: F16D 65/097

(54) **Plaque d'atténuation de bruit pour dispositif de freinage.**
Dämpfungsblech für Bremsvorrichtung.
Noise reduction shim for a braking device.

(30) Priorité: 17.10.2006 FR 0609194
(43) Date de publication de la demande: 23.04.2008
(73) Titulaire: ROBERT BOSCH GMBH, 70442 Stuttgart (DE)
(72) Inventeur: Beylerian, Bruno, 95380, LOUVRES (FR); Pasquet, Thierry, 93190, LIVRY GARGAN (FR)
(74) Mandataire: Hurwic, Aleksander Wiktor

(56) Documents cités:
- DE-U1- 20 115 073
- JP-A- 8 093 808
- JP-A- 59 047 536
- JP-A- 62 247 955
- JP-A- 2005 114 012
- US-A1- 2004 163 903

## Description

L'invention concerne une plaque intermédiaire de patin de frein à disque pour véhicule et notamment une plaque (appelée SHIM en langue anglaise) prévue dans les freins à disques entre le support de plaquette de frein et l'organe de commande pour amortir les vibrations qui peuvent se produire lors d'un freinage et qui engendrent des ondes acoustiques perceptibles souvent dans l'habitacle du véhicule sous forme d'un crissement.

Dans un véhicule équipé de freins à disques, chaque roue qui doit être freinée par un tel système de freinage comporte un disque de freinage solidaire de la roue et un dispositif de freinage solidaire du châssis du véhicule et qui vient par friction freiner le mouvement de rotation du disque. Le dispositif de freinage comporte de chaque côté du disque de freinage un patin de frein comprenant une plaquette de frein portée par un support de plaquette. Chaque support de plaquette est mobile perpendiculairement au plan du disque et est maintenu à deux de ses extrémités dans des logements d'une chape. Des organes de commande permettent d'exercer une pression sur les supports de plaquettes perpendiculairement au plan des plaquettes de freins.

Il est connu de prévoir une plaque intermédiaire (appelée SHIM en langue anglaise) entre chaque support de plaquette de frein et son organe de commande. Le rôle de cette plaquette intermédiaire est d'amortir la retransmission, vers l'organe de commande et l'ensemble du véhicule, des vibrations dues au frottement de la plaquette de frein sur le disque de freinage

Les deux patins de frein disposés de part et d'autre d'un disque permettent donc, lors d'un freinage, d'enserrer le disque et de freiner sa rotation. Lorsque les plaquettes de freins entrent en contact avec le disque, il se produit un frottement. Les plaquettes de freins ont tendance à être entraînées par le disque dans le sens de rotation du disque d'autant plus qu'il est prévu une possibilité de léger déplacement des supports de plaquettes de frein dans le sens de rotation du disque. L'organe de pression (piston de cylindre de frein), qui applique une force de freinage à un support de plaquette de frein, a tendance à être entraîné également dans ce sens de rotation par la plaquette intermédiaire, mais en raison du fait que cet organe de pression est immobilisé, il contrarie alors le déplacement de la plaquette intermédiaire. Ce fonctionnement peut également soumettre l'organe de commande à un effort de déformation.

On peut prévoir que la plaque intermédiaire ne soit pas solidaire du support de plaquette de frein mais il y a un risque que, lors d'un freinage, la plaque intermédiaire aille se plaquer en butée contre le logement du support de plaquette de frein de la chape. La plaque intermédiaire associée au support de plaquette de frein ne remplie alors plus son office de découplage des vibrations. L'invention a pour objet de résoudre cet inconvénient.

Le document DE 201 15 073 U révèle le préambule de la revendication 1.

### RESUME DE L'INVENTION

L'invention concerne donc une plaque intermédiaire pour patin de frein à disque selon la revendication 1.

Selon une forme de réalisation préférée de l'invention, lesdits ressorts présentent une forme en accordéon.

De plus, on prévoira que les extrémités des ressorts opposées à la plaque intermédiaire possèdent des dispositifs de fixation destinés à être fixés aux extrémités du patin.

Ces dites extrémités des ressorts pourront, par exemple, posséder des trous destinés à être emmanchés autour de bossages prévus sur le patin.

Dans cette forme de réalisation, les bossages pourront être sertis sur les extrémités des ressorts.

De plus, on prévoira avantageusement que la plaque intermédiaire comporte un dispositif à film de fluide destiné à être situé entre ladite plaque intermédiaire et le patin.

Par exemple, ce dispositif à film d'huile pourra comporter une première lame munie d'ouvertures, cette première lame étant située entre la plaque et une deuxième lame destinée à être en contact avec le patin.

L'invention concerne également un patin muni d'une plaque intermédiaire telle que décrite précédemment.

L'invention concerne également un frein à disque comportant:
- au moins un support de plaquette de frein maintenu dans une chape et portant une plaquette de frein comportant une surface plane destinée à être appliquée à une face plane latérale d'un disque de freinage. Un organe de commande permet d'appliquer au support de plaquette de frein une force perpendiculaire au plan de la surface plane de la plaquette de frein.
- une plaque intermédiaire d'absorption de vibrations prévue pour être entre le support de plaquette de frein et l'organe de commande avec une face destinée à être en contact avec l'organe de commande et une face opposée qui est en contact avec le support de plaquette de frein. Ladite plaque intermédiaire est réalisée telle que cela a été décrit précédemment.

### BREVE DESCRIPTION DES FIGURES

Les différents objets et caractéristiques de l'invention apparaîtront plus clairement dans la description qui va suivre ainsi que dans les figures annexées qui représentent:
- les figures la et 1b, un exemple général de réalisation d'une plaque selon l'invention pour patin de frein à disque,
- la figure 2, un exemple de plaque selon l'invention prévoyant un système à film de fluide,
- la figure 3, une variante de réalisation d'un patin de frein selon l'invention.

### DESCRIPTION DETAILLEE

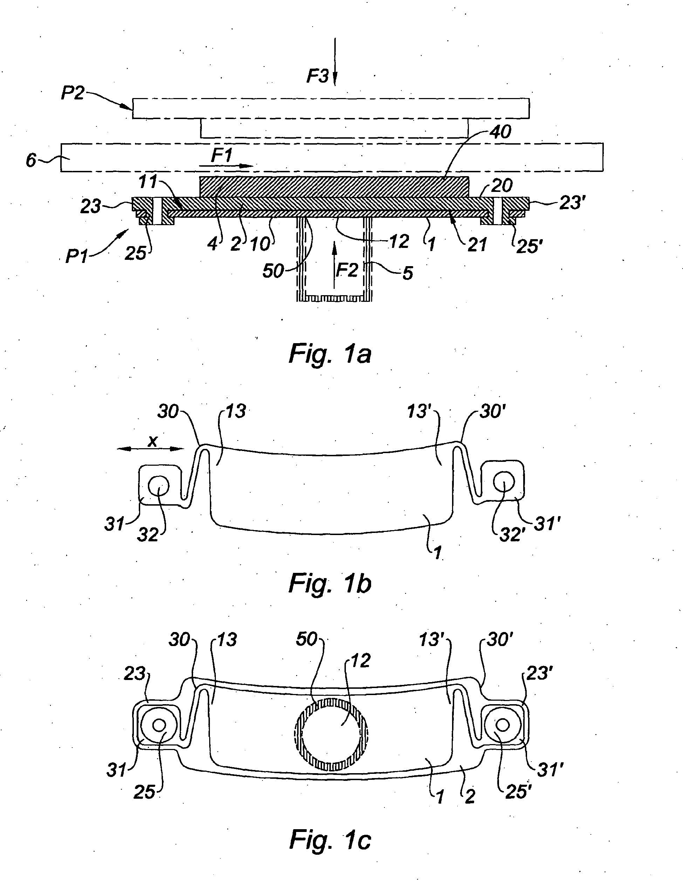

En se reportant aux figures 1a et 1c, on va donc décrire un exemple général de réalisation d'une plaque selon l'invention.

Comme cela est connu dans la technique un frein à disque comporte un disque 6 solidaire d'un essieu d'un véhicule et deux patins de frein P1 et P2 solidaire du châssis du véhicule et situés de part et d'autre des faces planes du disque.

Sur la figure 1a, on a représenté le patin P2 et le disque 3 en traits mixtes fins. Le patin P1 a été dessiné en détails car il sert à illustrer l'objet de l'invention.

Lorsque le disque tourne selon le sens de rotation indiqué par la flèche F1 et qu'on désire freiner la rotation du disque, on applique des forces de pression F2 et F3 aux patins P1 et P2 de façon qu'ils enserrent le disque. Lors du frottement des patins sur le disque des vibrations peuvent se produire et être perceptibles dans l'habitacle du véhicule sous forme d'ondes sonores. Pour éviter ou pour limiter la propagation de ces vibrations, on prévoit des plaques intermédiaires entre les organes qui appliquent les forces F2 et F3 et les patins P1 et P2.

Cependant lors du freinage, le disque a tendance à entraîner les patins selon de la flèche F1. Les plaques intermédiaires qui ne sont pas solidaires des patins peuvent néanmoins être également entraînées et venir en butée contre des dispositifs de maintien des oreilles des patins.

C'est pourquoi l'invention prévoit des plaques intermédiaires qui permettent d'éviter cet inconvénient.

La figure 1b représente un exemple de réalisation d'une telle plaque. Cette plaque 1 comporte des éléments élastiques 30 et 30' fixés aux extrémités 13 et 13' de la plaque. Ces éléments élastiques peuvent se déformer selon la direction X. Ils comportent à leur extrémité libre des moyens de fixation 31 et 31' permettant de les fixer à un support de plaquette de frein.

La figure 1a représente en coupe le patin de frein P1 équipé d'une telle plaque intermédiaire et la figure 1b représente le patin P1 en vue de dessous selon la flèche F2.

La figure 1c représente, en vue de dessous, la plaque intermédiaire fixée à un patin de frein.

Le support de plaquette de frein 2 du patin P1 comporte à ses deux extrémités latérales appelées oreilles, des éléments de fixation 25, 25' auxquels peuvent être fixés les moyens de fixation 31 et 31' de la plaque intermédiaire. Selon l'exemple de réalisation des figures 1a et 1c, ces éléments de fixation prennent la forme de bossages 25 et 25' sur lesquels sont emmanchés des trous 32 et 32' des moyens de fixation 31 et 31'.

Les moyens de fixation 31 et 31' peuvent être immobilisés sur les bossages 25 et 25'. Par exemple, ceux-ci peuvent être sertis sur les moyens de fixation 31 et 31'.

Le patin P1 reçoit un effort de freinage F2 par un organe de commande 5 qui applique cet effort dans une zone 12 de la face 10 de la plaque 1. Lors d'un freinage, le patin va être entraîné par le disque 6. La plaque intermédiaire pourra également être entraînée mais dans une moindre mesure, et elle reviendra dans sa position de repos (position en l'absence de freinage) sous l'effet des dispositifs élastiques 30 et 30' qui tiennent lieu de ressorts.

Selon un mode réalisation avantageux de l'invention les dispositifs ressorts 30 et 30' sont découpés dans la plaque 1. Ils présentent donc la même épaisseur que la plaque 1.

De plus, on prévoira, entre la face 11 de la plaque intermédiaire et la face 21 du support de plaquette de frein 2, des moyens permettant un glissement aisé de la plaque intermédiaire 1 par rapport au support de plaquette de frein 2. Ces moyens pourront prendre la forme d'un film lubrifiant ou d'un revêtement anti-adhérent réalisé sur la face 11, sur la face 21 ou sur les deux faces 11 et 21.

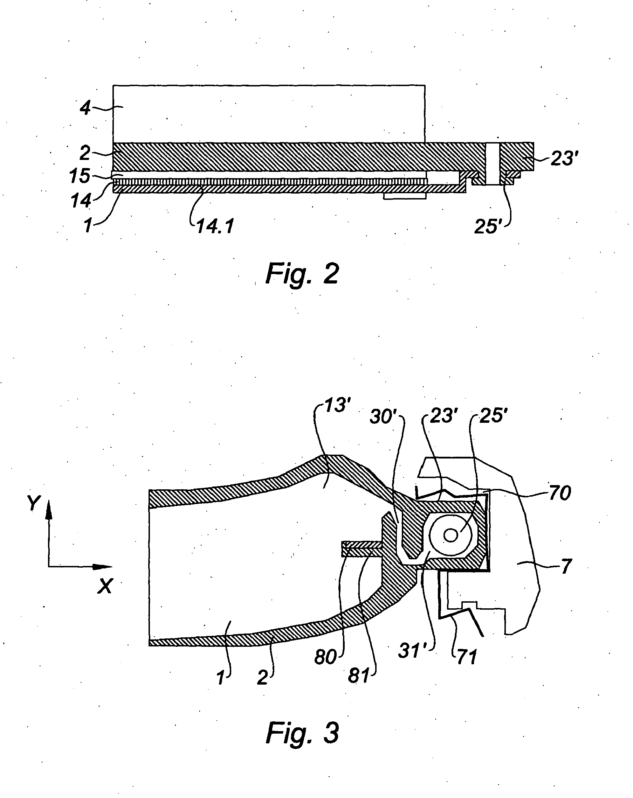

Dans le cas d'un film lubrifiant, on peut prévoir une disposition telle celle représenté par la figure 2 dans laquelle la plaque intermédiaire 1 comporte un dispositif à maintien d'un film d'huile. Une première lame 14 munie d'ouvertures telles que 14.1 est enserrée entre la plaque 1 et une deuxième lame 15. Les ouvertures de la première lame 14 sont remplies d'un fluide de préférence lubrifiant (huile ou graisse).

Un organe de commande (tel que 6 sur la figure 1a) exercera donc un effort sur le support de plaquette de frein par l'intermédiaire de la plaque 1 et de l'ensemble des lames 14 et 15 qui entretiennent des films de fluide entre, d'une part, la première lame 14 et la plaque 1 et, d'autre part, la première lame 14 et la deuxième lame 15. Ces films de fluides sont d'épaisseurs très réduites. On sait, dans la technique, que plus un film est mince, plus il est difficile de le comprimer. Dans ces conditions, dans un tel dispositif, il suffira qu'il y ait très peu de fluide en excès par rapport à la quantité de fluide contenue dans les cavités de la plaque 14 pour que des films de fluide soient entretenus entre la lame 14 et la plaque 1 d'une part et la lame 15 d'autre part. Le support de plaquette de frein 2 pourra donc glisser aisément par rapport à la plaque intermédiaire 1.

La figure 3 représente une variante de réalisation d'un dispositif à ressort de la plaque intermédiaire 1. Cette figure montre l'oreille 23' du support de plaquette de frein montée dans un logement 70 d'une chape 7 d'un frein à disque. Le ressort 71 permet de maintenir l'oreille 23' en position dans le logement 70 et d'amortir ses déplacements dans le logement.

De plus, le support de plaquette de frein possède un ergot 80 et la plaque 1 possède une encoche 81. Lorsque la plaque intermédiaire 1 est montée sur le support de plaquette de frein, l'ergot est placé dans l'encoche de façon que la plaque intermédiaire ne puisse être mobile que selon la direction X et pour l'empêcher de se déplacer dans la direction Y.

Selon une autre variante de réalisation non représentée, l'ergot (tel que 80), permettant de guider selon l'axe X le déplacement de la plaque 1 par rapport au support de plaquette de frein, peut être réalisé à partir de la lame 15 de la figure 2. En effet dans le dispositif de la figure 2, la plaque 1 doit pouvoir être mobile par rapport à lame 15, mais celle-ci peut être immobile ou quasiment immobile par rapport au support de plaquette de frein 2.

## Revendications

1. Plaque intermédiaire pour patin de frein à disque destinée à être placée contre la face du patin, elle-même destinée à recevoir les efforts de freinage d'un dispositif de commande de freinage (5), ledit patin (2) étant destiné à être disposé parallèlement au disque (6) selon une direction (X) parallèle à une tangente au disque, ladite plaque intermédiaire (1) comportant au moins deux ressorts (30, 30') destinés à relier deux des extrémités (13, 13') de la plaque intermédiaire (1) aux deux extrémités (23, 23') d'un patin situées selon ladite direction (X) parallèle à une tangente au disque, lesdits ressorts (30, 30') formant une seule pièce avec la plaque intermédiaire (1) et lesdits ressorts (30, 30') présentant une forme plane située selon le plan de la plaque intermédiaire (1) **caractérisée en ce qu'**elle comporte un dispositif à film de fluide (14, 15) qui comporte une première lame (14) munie d'ouvertures situées entre la plaque (1) et une deuxième lame (15) destinée à être en contact avec le patin (2).

2. Plaque intermédiaire pour patin de frein selon la revendication **1, caractérisé en ce que** lesdits ressorts (30, 30') présentent une forme en accordéon.

3. Plaque intermédiaire pour patin de frein selon la revendication **2, caractérisé en ce que** les extrémités des ressorts (30, 30') opposées à la plaque intermédiaire (1) possèdent des dispositifs de fixation (31, 31') destinés à être fixés aux extrémités (23, 23') du patin (2).

4. Plaque intermédiaire pour patin de frein selon la revendication **3, caractérisé en ce que** lesdites extrémités des ressorts (30, 30') possèdent des trous (32, 32') destinés à être emmanchés autour de bossages (25, 25') prévus sur le patin.

5. Plaque intermédiaire pour patin de frein selon la revendication **4, caractérisé en ce que** les bossages (25, 25') sont sertis sur les extrémités des ressorts (30, 30').

6. Patin de frein **caractérisé en ce qu'**il comporte une plaque intermédiaire (1) selon l'une quelconque des revendications précédentes.

7. Frein à disque comportant:
- au moins un support de plaquette de frein (2) maintenu dans une chape et portant une plaquette de frein (4) comportant une surface plane (40) destinée à être appliquée à une face plane latérale d'un disque de freinage (6), un organe de commande (5) permettant d'appliquer au support de plaquette de frein (2) une force perpendiculaire au plan de la surface plane (40) de la plaquette de frein,
- une plaque intermédiaire d'absorption de vibrations (1) prévue pour être entre le support de plaquette de frein (2) et l'organe de commande avec une face (10) destinée à être en contact avec l'organe de commande (5) et une face opposée (11) qui est en contact avec le support de plaquette de frein (2), **caractérisé en ce que** ladite plaque intermédiaire (1) est réalisée selon l'une quelconque des revendications 1 à 7.

## Claims

1. Shim for a disc-brake pad and intended to be placed against the face of the pad, itself intended to receive the braking forces from a brake control device (5), the said pad (2) being intended to be positioned parallel to the disc (6) in a direction (X) parallel to a tangent to the disc, the said shim (1) comprising at least two springs (30, 30') intended to connect two of the ends (13, 13') of the shim (1) to the two ends (23, 23') of a pad which are situated in the said direction (X) parallel to a tangent to the disc, the said springs (30, 30') forming a single piece with the shim (1) and the said springs (30, 30') having a flat shape lying in the plane of the shim (1), **characterized in that** it comprises a fluid-film device (14, 15) which comprises a first leaf (14) provided with openings situated between the shim (1) and a second leaf (15) intended to be in contact with the pad (2).

2. Shim for a brake pad according to Claim 1, **characterized in that** the said springs (30, 30') are concertina-shaped.

3. Shim for a brake pad according to Claim 2, **characterized in that** the opposite ends of the springs (30, 30') to the shim (1) ends have fastening devices (31, 31') intended to be fastened to the ends (23, 23') of the pad (2).

4. Shim for a brake pad according to Claim 3, **characterized in that** the said ends of the springs (30, 30') have holes (32, 32') intended to be push-fitted around bosses (25, 25') provided on the pad.

5. Shim for a brake pad according to Claim 4, **characterized in that** the bosses (25, 25') are crimped onto the ends of the springs (30, 30').

6. Brake pad, **characterized in that** it comprises a shim (1) according to any one of the preceding claims.

7. Disc brake, comprising:
- at least one brake pad backing plate (2) held in a carrier and bearing a pad of friction material (4) comprising a flat surface (40) intended to be pressed against a lateral flat face of a brake disc (6), a control member (5) allowing a force perpendicular to the plane of the flat surface (40) of the pad of friction material to be applied to the brake pad backing plate (2),
- a vibration-absorbing shim (1) designed to be placed between the brake pad backing plate (2) and the control member with one face (10) intended to be in contact with the control member (5) and an opposite face (11) which is in contact with the brake pad backing plate (2), **characterized in that** the said shim (1) is produced in accordance with any one of Claims 1 to 7.

## Patentansprüche

1. Zwischenplatte für einen Scheibenbremsbelagträger, die dazu vorgesehen ist, an der Fläche des Bremsbelagträgers anzuliegen, die selbst zum Aufnehmen der Bremskräfte einer Bremssteuervorrichtung (5) vorgesehen ist, wobei der Bremsbelagträger (2) dazu vorgesehen ist, parallel zur Scheibe (6) in einer zu einer Tangente der Scheibe parallel verlaufenden Richtung (X) angeordnet zu sein, wobei die Zwischenplatte (1) mindestens zwei Federn (30, 30') aufweist, die dazu vorgesehen sind, zwei der Enden (13, 13') der Zwischenplatte (1) mit den beiden Enden (23, 23') eines Bremsbelagträgers zu verbinden, die in einer zu einer Tangente der Scheibe parallelen Richtung (X) angeordnet sind, wobei die Federn (30, 30') einstückig mit der Zwischenplatte (1) ausgebildet sind und die Federn (30, 30') eine ebene Form haben, die in der Ebene der Zwischenplatte (1) liegt, **dadurch gekennzeichnet, dass** sie eine Fluidfilmvorrichtung (14, 15) mit einer ersten Lamelle (14) aufweist, die mit Öffnungen zwischen der Platte (1) und einer zweiten Lamelle (15) versehen ist, welche dazu vorgesehen ist, mit dem Bremsbelagträger (2) in Kontakt zu sein.

2. Zwischenplatte für einen Bremsbelagträger nach Anspruch 1, **dadurch gekennzeichnet, dass** die Federn (30, 30') zickzackförmig sind.

3. Zwischenplatte für einen Bremsbelagträger nach Anspruch 2, **dadurch gekennzeichnet, dass** die zur Zwischenplatte (1) entgegengesetzten Enden der Federn (30, 30') Befestigungsvorrichtungen (31, 31') aufweisen, die dazu vorgesehen sind, an den Enden (23, 23') des Bremsbelagträgers (2) befestigt zu sein.

4. Zwischenplatte für einen Bremsbelagträger nach Anspruch 3, **dadurch gekennzeichnet, dass** die Enden der Federn (30, 30') Löcher (32, 32') aufweisen, die dazu vorgesehen sind, um Erhebungen (25, 25') herum gedrückt zu werden, die am Bremsbelagträger vorgesehen sind.

5. Zwischenplatte für einen Bremsbelagträger nach Anspruch 4, **dadurch gekennzeichnet, dass** die Erhebungen (25, 25') auf den Enden der Federn (30, 30') verstemmt sind.

6. Bremsbelagträger, **dadurch gekennzeichnet, dass** er eine Zwischenplatte (1) nach einem der vorhergehenden Ansprüche aufweist.

7. Scheibenbremse mit:
- mindestens einer Bremsklotzhalterung (2), die in einem Halter gehalten ist und einen Bremsklotz (4) mit einer ebenen Fläche (40) trägt, die dazu vorgesehen ist, in Anlage an eine ebene Seitenfläche einer Bremsscheibe (6) gebracht zu werden, wobei ein Steuerorgan (5) es ermöglicht, eine zur Ebene der ebenen Fläche (40) des Bremsklotzes senkrechte Kraft auf die Bremsklotzhalterung (2) aufzubringen,
- einer vibrationsabsorbierenden Zwischenplatte (1), die dazu vorgesehen ist, zwischen der Bremsklotzhalterung (2) und dem Steuerorgan zu liegen, mit einer Fläche (10), die dazu vorgesehen ist, mit dem Steuerorgan (5) in Kontakt zu sein, und einer entgegengesetzten Fläche (11), die mit der Bremsklotzhalterung (2) in Kontakt ist, **dadurch gekennzeichnet, dass** die Zwischenplatte (1) nach einem der Ansprüche 1 bis 7 ausgeführt ist.
